# EUROPÄISCHE PATENTSCHRIFT

(11) **EP 0 532 952 B1**
(45) Veröffentlichungstag und Bekanntmachung des Hinweises auf die Patenterteilung: **04.01.1995**
(21) Anmeldenummer: 92114593.4
(22) Anmeldetag: 27.08.1992
(51) Int. Cl.: F16B 5/06

(54) **Verbundelement aus Blechelementen und profilen**
Connection members made of sheetmetal-elements and profiles
Eléments de fixation constitués de tôles et profilés

(30) Priorität: 04.09.1991 DE 4129329
(43) Veröffentlichungstag der Anmeldung: 24.03.1993
(73) Patentinhaber: VAW Aluminium AG, D-53117 Bonn (DE)
(72) Erfinder: Ebert, Jörg, Dr., W-5000 Köln 40 (DE)
(74) Vertreter: Müller-Wolff, Thomas, Dipl.-Ing.

(56) Entgegenhaltungen:
- EP-A- 0 105 962
- FR-A- 1 079 426
- FR-A- 2 479 306
- US-A- 3 119 473
- US-A- 3 191 726
- US-A- 3 323 819

## Beschreibung

Die Erfindung betrifft ein Verbundelement aus Blechelementen und Profilen, Spreizprofilkörper und Verfahren zur Herstellung eines Verbundelementes unter Verwendung des Spreizprofilkörpers.

Aus dem US-A-3 323 819 ist eine Wandstruktur, bestehend aus einem Aufnahmeteil mit Längsnuten bekannt, in die ein Paar Blechelemente einschiebbar sind, die axial in den Nuten gehalten werden. Die Enden der Blechelemente sind an den in die Nuten hineinragenden Bereichen zurückgebogen und bilden dabei einen Winkel, in den stangenförmige Paßstücke eingesetzt werden können.

Die bekannten Wandstrukturen können für verschiedene Anwendungsfälle beim Zusammenbau von Paneelen und Blechelementen eingesetzt werden, z.B. für Radiator-Gehäuse, Blechbehälter und Wandunterteilungen wie z.B. Zwischenböden. Die Belastbarkeit der damit erzielten Verbundstruktur ist infolge der Dreipunktabstützung der stangenförmigen Paßstücke in den Winkelbereichen nur begrenzt.

Bei anderen bekannten Verbundelementen sind die Verbindungsstellen zwischen den Blechteilen und den Profilen als Schweiß-, Niet- oder Klemmverbindungen ausgeführt. Diese Verbindungsarten weisen eine Reihe von Nachteilen auf. Die Herstellung von Schweißverbindungen ist kostenintensiv, bedingt durch die Notwendigkeit von qualifiziertem Personal. Da nur bestimmte Werkstoffe miteinander verschweißt werden können, ist man bei der Auswahl geeigneter Werkstoffe stark eingeschränkt. Zudem lassen sich Schweißverbindungen nur unter einem hohen Zeitaufwand herstellen. Letzteres gilt ebenfalls für Nietverbindungen zwischen Blechteilen und Profilen. Nietverbindungen sind ohne zusätzliche Abdichtungsmaßnahmen nicht wasserdicht und dementsprechend für maritime Anwendungen bzw. Anwendungen im Offshore-Bereich nur bedingt geeignet.

Aufgabe der vorliegenden Erfindung ist es, ein Verbundelement zu entwickeln, das stabile, hoch belastbare und gleichzeitig wasserdichte Fügestellen aufweist. Mit dem neuen Verbundelement soll es möglich werden, Werkstoffe unterschiedlicher Art ohne Rücksicht auf deren Verschweißbarkeit miteinander zu verbinden.

Dabei soll sich das neue Verbundelement insbesondere zum Aufbau von tragenden bzw. hoch belastbaren Wandelementen oder Fachwerkskonstruktionen in maritimen Anwendungen eignen. Eine weitere Aufgabe der vorliegenden Erfindung ist es, ein Verfahren zu entwickeln, das ein leichtes, schnelles und kostengünstiges Fügen des Verbundelementes, auch unmittelbar auf der Baustelle, erlaubt. Unter Anwendung dieses Verfahrens soll es möglich werden, ganze Wandsektionen in einem Arbeitsschritt zu fügen.

Diese Aufgabe wird erfindungsgemäß gelöst durch ein Verbindungselement mit den Merkmalen nach Anspruch 1, sowie ein Verfahren mit den in Anspruch 18 angegebenen Merkmalen. Dabei wird ein Spreizprofilkörper nach Anspruch 14 verwendet. Vorteilhafte Ausgestaltungen der Erfindung ergeben sich aus den jeweiligen Unteransprüchen.

Das erfindungsgemäße Verbundelement besteht aus mindestens einem Blechelement und mindestens einem massiven, offenen oder hohlförmigen Profil. Das Profil ist mit mindestens einer hinterschnittenen Nut versehen, deren Öffnung durch Nutwangen begrenzt ist. Mindestens ein Ende des Blechelementes ist entsprechend der inneren Form der Profilnut so weit zurückgebogen, daß zwischen der äußeren Kante des Blechendes und der Blechfläche ein Schlitz verbleibt. Das zurückgebogene Blechende ist so in die hinterschnittene Profilnut eingeschoben, daß der Schlitz im Bereich der Nutöffnung liegt. In das zurückgebogene Blechende ist ein rohrförmiger Spreizprofilkörper eingelegt, der eine längsseitige Anformung aufweist. Dabei greift die Anformung durch den Schlitz und die Nutöffnung nach außen über mindestens eine der Nutwangen. Der Spreizprofilkörper ist so gegen das zurückgebogene Blechende aufgeweitet, daß das Blechelement kraft- und formschlüssig mit dem Profil verbunden ist.

In einer vorteilhaften Ausgestaltung des erfindungsgemäßen Verbundelementes weist das Blechelement neben dem zurückgebogenen Blechende eine Rückstülpung auf, die eine der Nutwangen des Profiles umschließt. Die Anformung des Profilkörpers ist hier T-förmig ausgebildet. Sie greift auf einer Seite der Nut unmittelbar über die Nutwange und auf der anderen Seite über die die andere Nutwange umschließende Blechrückstülpung. Auf diese Weise wird eine unzulässige Erweiterung der Nut bei der Aufweitung des Spreizprofilkörpers verhindert und gleichzeitig ein hoher Widerstand gegenüber starken Ausziehkräften im Belastungsfall gewährleistet. Die Nut des Profiles ist vorzugsweise kreisförmig oder oval ausgebildet. Entsprechend dieser vorgegebenen Kontur ist das Blechende umgeformt.

Das erfindungsgemäße Verbundelement kann mehrere Blechelemente umfassen, die in je einer Nut desselben Profiles befestigt sind. In diesem Fall können Abstandshalter zwischen den Blechelementen zur Versteifung des Verbundes vorgesehen werden.

In einer weiteren Ausgestaltung kann das Blechelement so geformt sein, daß der Querschnitt U-förmig ausgebildet ist. Die beiden Schenkel des Blechelementes sind hierbei in zwei Nuten desselben Profils erfindungsgemäß befestigt. Ein derartiges Blechelement ist insbesondere als Abschlußelement einer Wandkonstruktion geeignet. Durch entsprechende Anformungen an dem U-förmigen Blechelement z. B. auf der dem Profil gegenüberliegenden Seite kann die Wandkonstruktion aber auch fortgesetzt werden, entweder konventionell oder erfindungsgemäß. In diesem Ausführungsbeispiel kann der Hohlraum des Blechelementes z. B. durch Ausschäumen mit einer Isolierschicht gefüllt sein.

In einer vorteilhaften Ausgestaltung weist das Verbundelement zwei parallele Blechelemente auf, die zu einem Blechsandwichelement integriert sind. Zwischen den Blechelementen ist hier z. B. eine Isolierschicht angeordnet, die sowohl wärmeisolierend als auch versteifend wirken kann. Die Isolierschicht kann auf übliche Weise eingebracht werden, z. B. durch Einkleben einer vorgefertigten Schicht oder durch Ausschäumen des Hohlraumes zwischen den Blechelementen.

Gemäß der vorliegenden Erfindung können auch Blechsandwichelemente mit hitzeempfindlichen Isolier- bzw. Haftschichten verwendet werden. Eine Beschädigung oder Zerstörung der Schichten, die beim Schweißen derartiger Blechsandwichelemente unvermeidbar ist, kann hierbei nicht erfolgen.

Durch eine besondere Ausgestaltung und Anordung der Blechelemente läßt sich die optische Wirkung einer aus dem erfindungsgemäßen Verbundelement aufgebauten Gesamtkonstruktion günstig beeinflussen. Die Blechelemente können z. B. so angeordnet sein, daß die sichtbaren Außenflächen der Profile und der Blechelemente in einer Ebene liegen. Ein verfahrenstechnisch bedingter Spalt zwischen den Außenflächen kann dabei entweder als optische Unterteilung der Konstruktion ausgenutzt werden, oder mit einem Füller eingeebnet werden.

In einer besonderen Ausführungsform ist das Blechelement einseitig über einen Spreizprofilkörper mit nasen- oder T-förmiger Anformung in einer Nut des Profiles befestigt. Auf der anderen Seite ist das Blechelement in beliebiger Art mit einem weiteren Konstruktionselement verbunden. Das Blechelement weist hierbei eine Einformung innerhalb der Blechfläche auf, so daß das Blech eine federnde Wirkung erhält. Auf diese Weise wird eine begrenzte, abgefederte Relativbewegung zwischen dem Profil und dem weiteren Konstruktionselement ermöglicht, z. B. zum Toleranzausgleich.

Die Blechelemente und Profile bestehen vorzugsweise aus Aluminium bzw. einer Aluminiumlegierung oder Stahl. Dabei können die in einem Verbund verwendeten Blechelemente und Profile jeweils aus einem unterschiedlichen Material gewählt werden. Die Profile können grundsätzlich in beliebiger Art hergestellt sein. Bei geeigneten Werkstoffen werden bevorzugt Strangpreßprofile verwendet.

Ein geeignetes Material für den Spreizprofilkörper ist Aluminium bzw. eine Aluminiumlegierung. Der Spreizprofilkörper ist vorzugsweise als Strangpreßprofil ausgebildet.

Nach dem erfindungsgemäßen Verfahren zur Herstellung des neuen Verbundelementes wird zunächst das zu verbindende Ende des Blechelementes entsprechend der Innenform der Profilnut umgeformt. Die Umformung kann z. B. durch Rollformen oder Umbördeln erfolgen, wobei einfache Umformungsarbeiten unmittelbar auf der Baustelle vorgenommen werden können. In Anwendungsfällen, in denen der Spreizprofilkörper im fertig montierten Verbundelement nicht unmittelbar von außen zugänglich ist, wird der Spreizprofilkörper vorzugsweise vor dem Einsetzen des Blechelementes in die Profilnut in das zurückgebogene Blechende eingelegt. Dabei hat es sich als geeignet erwiesen, einen Spreizprofilkörper mit einem geringen Übermaß gegenüber den Innenabmessungen des zurückgebogenen Blechendes zu verwenden. Auf diese Weise wird der Spreizprofilkörper leicht geklemmt und ein Herausrutschen bei der Montage verhindert. Das so vorbereitete Blechelement wird in die Nut des Profiles eingeschoben. Anschließend wird der Spreizprofilkörper aufgeweitet, wobei z. B. ein Dorn mit entsprechendem Übermaß durch den Hohlraum des Spreizprofilkörpers gezogen oder geschoben wird. Die über mindestens eine der Nutwangen greifende Anformung des Spreizprofilkörpers verhindert dabei ein Auffedern der Nutwangen, so daß eine kraft- und formschlüssige Verbindung erzielt wird. In Anwendungsfällen, bei denen der Spreizkörper von außen zugänglich ist, kann der Spreizkörper auch nach Einsetzen des Blechelementes in die Profilnut eingeschoben werden.

Durch Aneinandersetzen mehrerer erfindungsgemäßer Verbundelemente können insbesondere auch großflächige Wand- bzw. Fachwerkskonstruktionen sehr einfach zusammengefügt werden.

Das erfindungsgemäße Verbundelement weist stabile, hoch belastbare und gleichzeitig wasserdichte Fügestellen auf. Werkstoffe unterschiedlicher Art können ohne Rücksicht auf deren Verschweißbarkeit miteinander verbunden werden. Das erfindungsgemäße Verfahren erlaubt ein leichtes, schnelles und kostengünstiges Fügen der Elemente, auch unmittelbar auf der Baustelle. Aufgrund seiner Eigenschaften eignet sich das Verbundelement zur Herstellung von Wandelementen oder Fachwerkkonstruktionen mit tragender Funktion, insbesondere auch im maritimen Bereich, wie z. B. für Ölbohrplattformen und Schiffs- oder LkW-Aufbauten.

Das erfindungsgemäße Verbundelement kann auch vorteilhaft eingesetzt werden, um Werkstoffe aus unterschiedlichem Material zu verbinden. Beim Aufbau einer Wandkonstruktion beispielsweise auf einem Boden aus Stahl (Ölbohrplattformen, Schiffsdecks) wird z. B. ein erfindungsgemäß gestaltetes Grundprofil aus einem mit dem Boden verschweißbaren Material auf den Boden geschweißt. Das Grundprofil ist mit mindestens einer Nut versehen, die in Längsrichtung parallel zum Boden verläuft. In dieser Nut können die Blechelemente, z. B. aus Aluminium, des weiteren Aufbaus erfindungsgemäß befestigt werden. Auf diese Weise wird z. B. eine aufwendige Verbindungstechnik über explosionsgeschweißte Bimetall-Übergangsstücke aus Aluminium und Stahl, die in derartigen Anwendungen üblich ist, vermieden.

Nachfolgend wird die Erfindung anhand von Ausführungsbeispielen und Zeichnungen näher erläutert. Es zeigen:
- Fig. 1:: Erfindungsgemäßes Verbundelement, bestehend aus einem einzelnen Blechelement, das über einen Spreizkörper mit einseitiger Anformung mit einem Profil verbunden ist.
- Fig. 2:: Erfindungsgemäßes Verbundelement, bestehend aus 2 parallelen Blechelementen mit zwischenliegender Isolationsschicht, die über je einen Spreizkörper mit einseitiger Anformung mit einem Profil verbunden sind.
- Fig. 3:: Erfindungsgemäßes Verbundelement entsprechend Fig. 1, wobei der Spreizprofilkörper eine T-förmige Anformung aufweist.
- Fig. 4:: Erfindungsgemäßes Verbundelement nach Fig. 2, wobei die Spreizprofilkörper eine T-förmige Anformung aufweisen.
- Fig. 5:: Erfindungsgemäßes Verbundelement nach Fig. 3, wobei die Außenflächen von Blechelement und Profil in einer Ebene liegen.
- Fig. 6:: Erfindungsgemäßes Verbundelement nach Fig. 4, wobei die Außenflächen der Blechelemente und des Profiles in einer Ebene liegen.
- Fig. 7:: Blechelement mit eingelegtem Spreizprofilkörper vor dem Einsatz in die Nut des Profiles.
- Fig. 8:: Erfindungsgemäßes Verbundelement nach Einsatz von Blechelement und Spreizprofilkörper in die Profilnut.
- Fig. 9:: Erfindungsgemäßes Verbundelement nach Aufweitung des Spreizprofilkörpers.
- Fig. 10:: Erfindungsgemäßes Verbundelement, bestehend aus einem Blechelement, verbunden mit einem auf einen Boden geschweißten Profil.
- Fig. 11:: Erfindungsgemäßes Verbundelement, bestehend aus einem Blechsandwichelement, verbunden mit einem auf einen Boden geschweißten Profil.
- Fig. 12:: Erfindungsgemäßes Verbundelement, bestehend aus zwei aneinanderliegenden Profilen, die mit einem Blechelement verbunden sind.

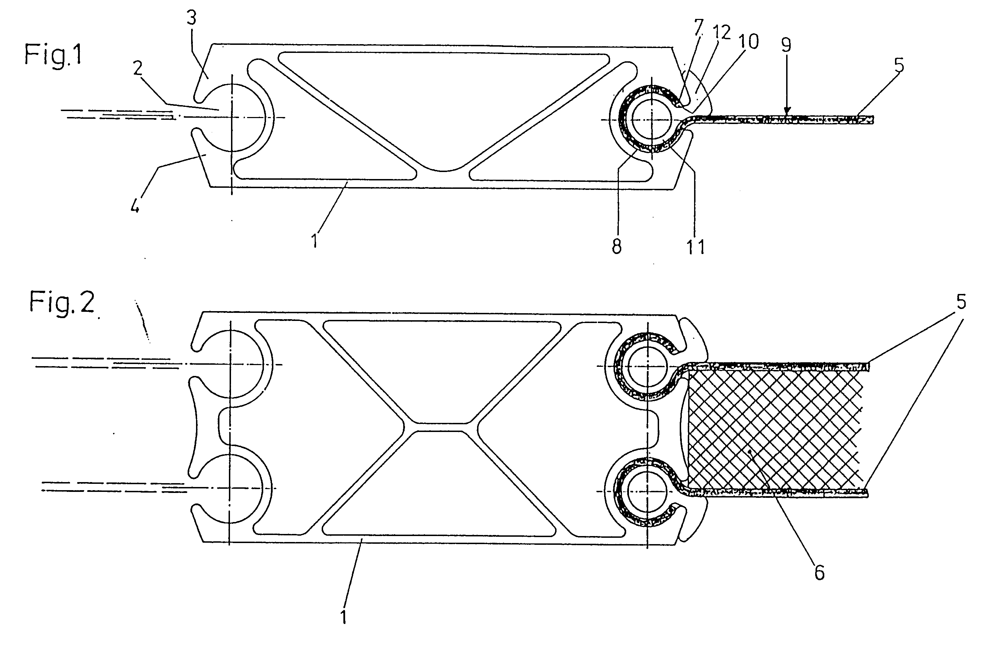

Fig. 1 zeigt eine einfache Ausführung des erfindungsgemäßen Verbundelementes. Das Profil 1 ist als Strangpreßprofil ausgebildet und weist auf den Stirnseiten je eine hinterschnittene Nut 2 auf, deren Öffnung von den Nutwangen 3 und 4 begrenzt ist. Das einzelne Blechelement 5 ist an einem Ende entsprechend der Innenkontur der Profilnut 2 soweit zurückgebogen, daß zwischen der äußeren Kante 7 des zurückgebogenen Blechendes 8 und der Blechfläche 9 ein Schlitz 10 verbleibt. Das zurückgebogene Blechende 8 ist so in die Profilnut 2 eingeschoben, daß der Schlitz 10 im Bereich der Nutöffnung liegt. In das zurückgebogene Blechende 8 ist von außen zugänglich ein Spreizprofilkörper 11 eingelegt, der eine sich über die gesamte Länge erstreckende einseitige Anformung 12 aufweist.

Diese nasenförmige Anformung 12 greift durch den Schlitz 10 und die Nutöffnung nach außen über eine der Nutwangen 3, 4. Der Spreizprofilkörper selbst ist gegen das zurückgebogene Blechende 8 so aufgeweitet, daß das Blechelement 5 kraft- und formschlüssig mit dem Strangpreßprofil 1 verbunden ist.

Nach Fig. 2 sind in derselben Weise gleichzeitig zwei Blechelemente 5 mit dem Strangpreßprofil 1 verbunden. Die beiden Blechelemente sind hierbei als Deckbleche eines Blechsandwichelementes ausgebildet. Zwischen den parallelen Blechelementen 5 ist eine Isolierschicht 6 angeordnet, die neben einer wärmeisolierenden Funktion auch versteifend wirken kann.

Die Ausführung des erfindungsgemäßen Verbundelementes gemäß den Fig. 1 und 2 kann nicht mit extrem hohen Ausziehkräften belastet werden, da der Spreizprofilkörper 11 lediglich mit einer einseitigen Anformung 12 versehen ist. Sie bietet aber den Vorteil, daß das Einformen der Blechelementenden mit einfachen Mitteln auch unmittelbar auf der Baustelle erfolgen kann.

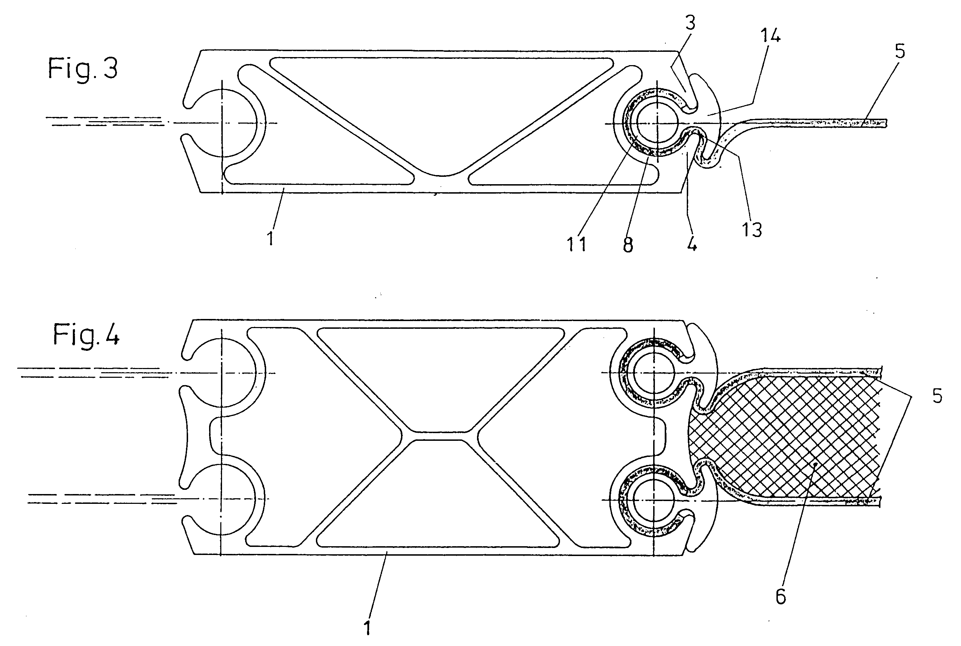

Sehr hohen Anforderungen bezüglich der Ausziehkräfte genügt eine Ausführung des erfindungsgemäßen Verbundelementes entsprechend Fig. 3 (einzelnes Blechelement) und Fig. 4 (Blechsandwichelement). In diesem Fall weist der Spreizprofilkörper 11 eine sich über die gesamte Länge erstreckende T-förmige Anformung 14 auf. Die T-förmige Anformung 14 greift über beide Nutwangen 3, 4 und verhindert so deren Aufweitung beim Auftreten von Ausziehkräften. Um ein Übergreifen beider Nutwangen 3,4 zu ermöglichen, weist das Blechelement 5 neben dem zurückgebogenen Blechende 8 eine den Konturen der Nutwange und der Anformung angeglichene sinusschleifenförmige Rückstülpung 13 auf. Auf diese Weise ergibt sich neben einem größeren Umschlingungsweg auch eine Verzahnung zwischen dem Strangpreßprofil, dem Spreizkörper und dem Blechelement. Dementsprechend kann das erfindungsgemäße Verbundelement in dieser Ausführungsform auch mit sehr hohen Auszugskräften belastet werden.

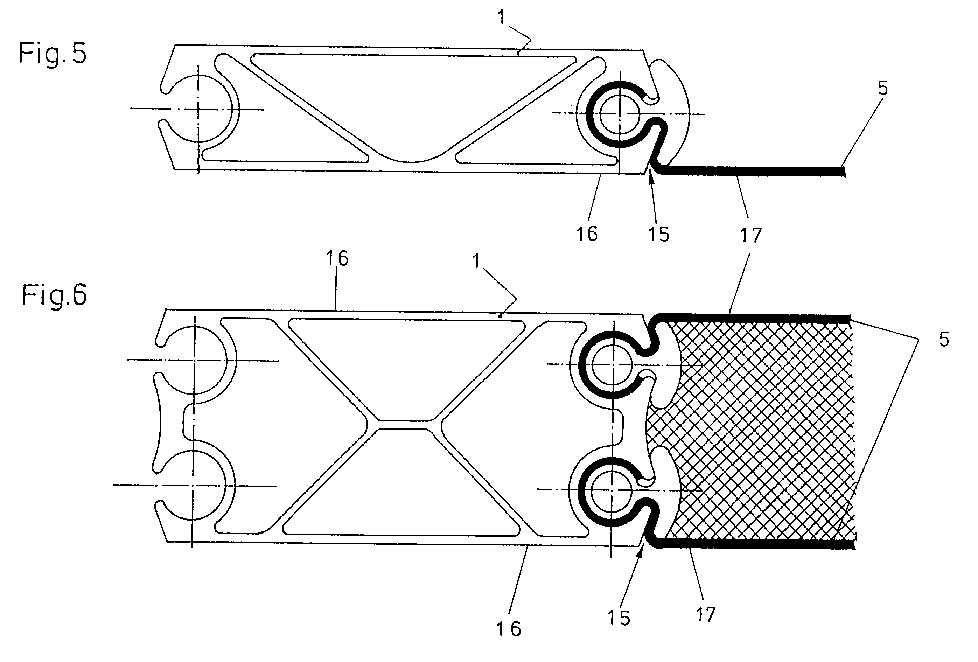

Fig. 5 (einzelnes Blechelement) und Fig. 6 (Blechsandwichelement) zeigen Varianten des erfindungsgemäßen Verbundelementes mit einer verbesserten optischen Gestaltung. Die sichtbaren Außenflächen 17 der Blechelemente 5 sind hierbei so angeordnet, daß sie in einer Ebene mit den sichtbaren Außenflächen 16 des Profils 1 liegen. Auf diese Weise wird eine bündige Gesamtaußenfläche des Verbundelementes erzielt. Da das Blechelement 5 im Übergang zur Außenfläche 17 rund gebogen ist, verbleibt ein keilförmiger Spalt 15 zwischen den Außenflächen des Profils und des Blechelementes. Dieser Spalt kann entweder als optische Unterteilung einer aus den erfindungsgemäßen Verbundelementen aufgebauten Gesamtkonstruktion ausgenutzt werden. Falls notwendig, kann der Spalt in einfacher Weise mit einem geeigneten Füller, wie z. B. Spachtel, eingeebnet werden. In der Ausführungsform nach Fig. 6 sind die Spreizprofilkörper nicht unmittelbar von außen zugänglich. Das Einsetzen der Blechelemente 5 in die Profilnuten 2 sollte daher in diesem Fall mit bereits vormontierten Spreizkörpern erfolgen.

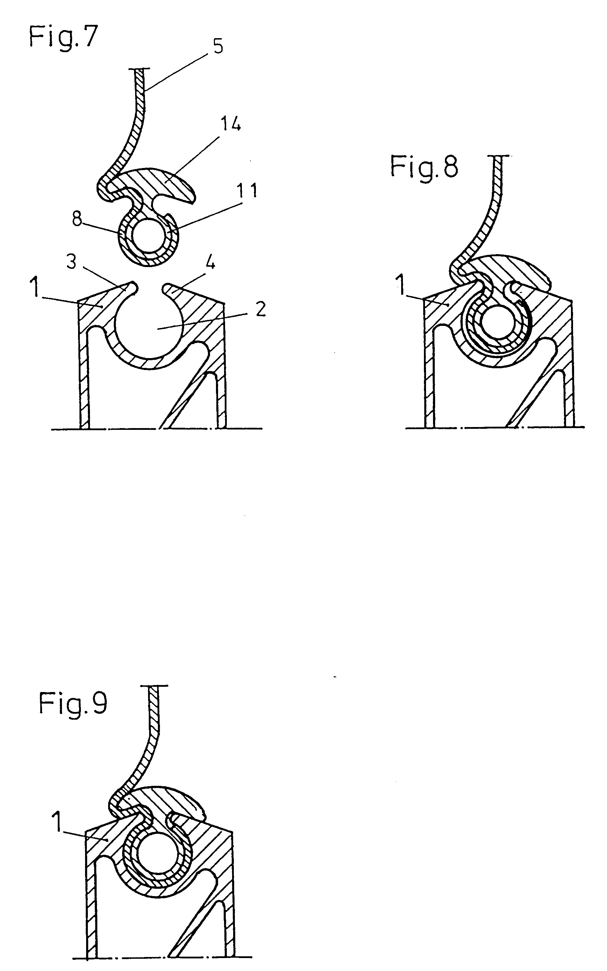

Die Fig. 7 bis 9 zeigen einzelne Stufen einer bevorzugten Ausführungsform des erfindungsgemäßen Verfahrens. Zunächst werden die Blechenden dem Anwendungsfall entsprechend umgeformt, wobei die Umformung z. B. durch Rollformen oder Umbördeln erfolgt. In das zurückgebogene Blechende 8 wird der Spreizprofilkörper 11 eingeführt (Fig. 7). In bevorzugter Ausführungsform weist der Spreizprofilkörper 11 ein geringfügiges Übermaß gegenüber den Innenabmessungen des zurückgebogenen Blechendes 8 auf. Auf diese Weise wird der Spreizprofilkörper leicht fixiert und ein Heraus-rutschen bei der Montage wird verhindert. Das zurückgebogene Blechende 8 wird dann zusammen mit dem Spreizprofilkörper 11 in die Profilnut 2 eingeschoben (Fig. 8). Anschließend wird der Spreizprofilkörper 11 so aufgeweitet, daß eine kraft- und formschlüssige Verbindung zwischen den Einzelteilen des Verbundelementes erzielt wird (Fig. 9). Die Aufweitung des Spreizprofilkörpers 11 erfolgt vorzugsweise dadurch, daß ein Dorn mit ausreichendem Übermaß durch den Hohlraum des Spreizprofilkörpers 11 gezogen oder geschoben wird. Im dargestellten Fall weist der Spreizprofilkörper 11 die T-förmige Anformung 14 auf, die über beide Nutwangen 3, 4 greift. Auf diese Weise wird eine unzulässige Erweiterung der Nut 2 bei der Aufweitung verhindert und ein hoher Widerstand gegen Ausziehkräfte im Belastungsfall gewährleistet.

In Anwendungsfällen, bei denen die Spreizprofilkörper von außen zugänglich angeordnet sind, kann der Spreizprofilkörper auch nach Einsetzen des Blechelementes in die Profilnut in das zurückgebogene Blechende 8 geschoben werden.

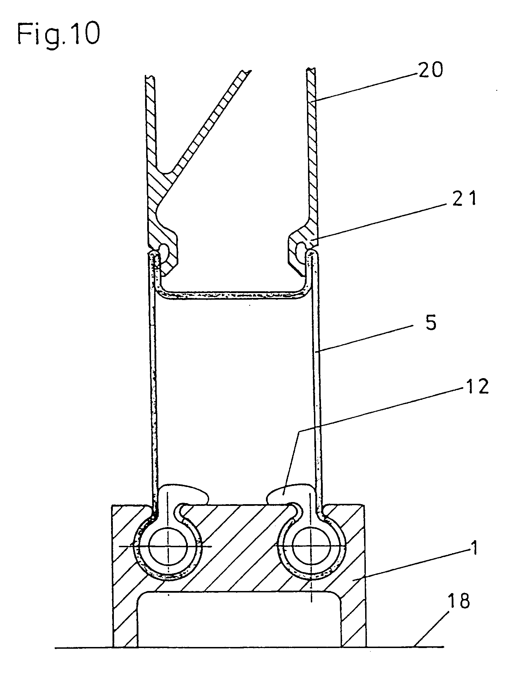

Die Fig. 10 bis 12 zeigen Ausführungsbeispiele für die Verwendung des erfindungsgemäßen Verbundelementes zum Verbinden von Konstruktionselementen aus unterschiedlichen Werkstoffen.

Gemäß Fig. 10 ist das Profil 1 aus Stahl auf einen Boden bzw. ein Bodenelement 18 aus gleichem Material aufgeschweißt. Das Profil 1 ist mit 2 Nuten versehen, in denen die beiden Schenkel eines Blechelementes 5 mit U-förmigem Querschnitt erfindungsgemäß über Spreizprofilkörper mit nasenförmiger Anformung 12 befestigt sind. Das Blechelement besteht in diesem Falle aus Aluminium bzw. einer Aluminiumlegierung. Auf der dem Profil 1 gegenüberliegenden Seite weist das Blechelement 5 eingeformte Stege auf. Die Wand- bzw. Aufbautenkonstruktion wird an dieser Stelle fortgesetzt durch ein sich an diesen Stegen abstützendes Profil 20. Das Profil 20 besteht aus einem mit dem Blechelement 5 verschweißbaren Material, wie z. B. Aluminium. Um eine stabile Schweißverbindung zu ermöglichen weist das Profil 20 an der Verbindungsstelle mit dem Blechelement 5 geeignete Schweißbadstützen 21 auf. Die Wandkonstruktion kann über das Profil 20 in beliebiger Art fortgesetzt werden.

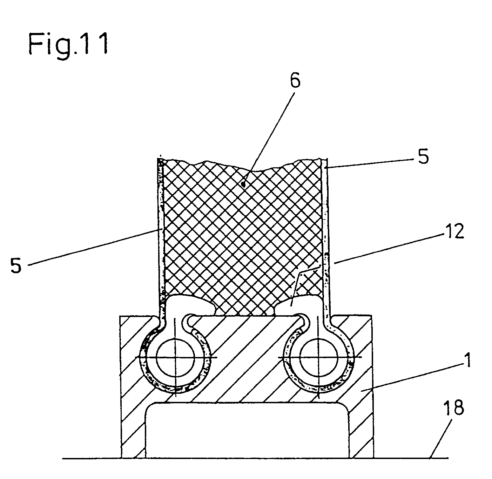

Fig. 11 zeigt eine analoge Grundkonstruktion, in diesem Fall verbunden mit einem Blechsandwichelement. Zwei Blechelemente 5 mit zwischenliegender Isolierschicht 6 sind in den beiden Nuten des Profils 1 erfindungsgemäß über Spreizprofilkörper mit nasenförmiger Anformung 12 befestigt. Die Blechelemente 5 bestehen in diesem Fall aus Aluminium bzw. einer Aluminiumlegierung. Die in Fig. 11 dargestellte Basisanordnung kann z. B. durch Anreihung weiterer erfindungsgemäßer Verbundelemente zu einer Wand- bzw. Aufbautenkonstruktion zusammengefügt werden.

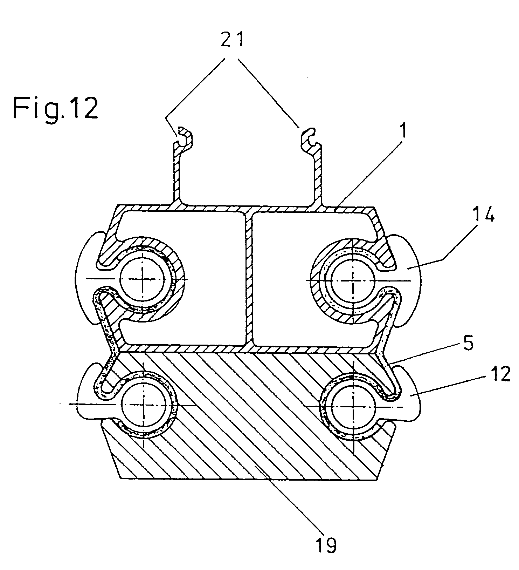

In Fig. 12 ist ein weiteres Anwendungsbeispiel für das erfindungsgemäße Verbundelement dargestellt. Das Profil 1 aus Aluminium bzw. einer Aluminiumlegierung liegt in diesem Fall an einem weiteren Konstruktionselement 19, z. B. aus Stahl, an. Dabei kann das Konstruktionselement 19 Teil einer Basiskonstruktion sein oder z. B. auf diese aufgeschweißt sein. Sowohl das Profil 1 als auch das Konstruktionselement 19 weisen je zwei Nuten auf. Dabei sind das Profil 1 und das Konstruktionselement 19 so angeordnet, daß die Nuten parallel fluchtend übereinanderliegen. Die Blechelemente 5 sind in diesem Anwendungsbeispiel als Blechstreifen mit je zwei zurückgebogenen Blechenden ausgebildet. Jeweils einer dieser Blechstreifen ist in jeweils zwei übereinanderliegenden Nuten eingelegt und hier über erfindungsgemäße Spreizprofilkörper mit nasenförmiger Anformung 12 oder T-förmiger Anformung 14 befestigt. Die Blechstreifen sind vorzugsweise so geformt, daß sie durch Auffedern einen Toleranzausgleich zwischen den zusammengefügten Elementen ermöglichen, bei gleichzeitiger Gewährleistung einer hochfesten, wasserdichten Fügestelle. Im dargestellten Fall weist das Profil 1 an der dem Konstruktionselement 19 gegenüberliegenden Seite zwei Stege mit Schweißbadstützen 21 auf, an denen die weiteren Elemente einer Wandkonstruktion angeschweißt werden können. Der Aufbau der Wandkonstruktion kann aber auch über Befestigung von weiteren erfindungsgemäßen Verbundelementen entsprechend den Fig. 1 - 6 in zusätzlichen Nuten des Profils 1 erfolgen.

Die in den Fig. 10 bis 12 dargestellten Konstruktionen sind insbesondere für den maritimen Einsatz geeignet. Bei derartigen Anwendungen sind häufig Aufbauten aus Aluminium mit Tragkonstruktionen aus Stahl, wie z. B. Unterwasserkonstruktionen von Off-Shore-Plattformen oder Schiffsdecks, zu verbinden. Diese Verbindungen erfolgen bisher sehr aufwendig über Zwischenstücke, die z. B. durch Sprengplattieren von Aluminium auf Stahl oder Umpressen von Stahlschienen mit Aluminium hergestellt werden. Derartig aufwendige Techniken können bei Anwendung des erfindungsgemäßen Verbundelementes vermieden werden.

## Patentansprüche

1. Verbundelement aus mindestens einem Blechelement (5) und mindestens einem massiven, offenen oder hohlförmigen Profil (1), wobei
a) das Profil (1) mindestens eine hinterschnittene Nut (2) aufweist, deren Öffnung von Nutwangen (3, 4) begrenzt ist, und
b) mindestens ein Ende des Blechelementes (5) entsprechend der inneren Form der Profilnut (2) zurückgebogen ist, wobei zwischen der äußeren Kante (7) des zurückgebogenen Blechendes (8) und der Blechfläche (9) ein Schlitz (10) angeordnet ist, und
c) das zurückgebogene Blechende (8) in die hinterschnittene Profilnut (2) eingeschoben ist, wobei der Schlitz (10) im Bereich der Öffnung der Profilnut (2) angeordnet ist, und
d) in das zurückgebogene Blechende (8) ein rohrförmiger Spreizprofilkörper (11) eingeschoben ist, der eine längsseitige Anformung (12, 14) aufweist, die durch den Schlitz (10) nach außen über mindestens eine der Nutwangen (3, 4) des Profiles (1) greift, und
e) der Spreizprofilkörper (11) gegen das zurückgebogene Blechende (8) so aufgeweitet ist, daß das Blechelement (8) kraft- und formschlüssig mit dem Profil (1) verbunden ist.

2. Verbundelement nach Anspruch 1,
dadurch gekennzeichnet, daß
a) das Blechelement neben dem zurückgebogenen Blechende (8) eine Rückstülpung (13) aufweist, die eine der Nutwangen (3, 4) des Profiles (1) umschließt, und
b) der Spreizprofilkörper (11) eine T-förmige Anformung (14) aufweist, die auf der einen Seite unmittelbar über eine Nutwange (3) des Profiles (1) und auf der anderen Seite über das die andere Nutwange (4) umschließende Blech greift.

3. Verbundelement nach einem der vorhergehenden Ansprüche, dadurch gekennzeichnet, daß die Nut (2) des Profiles (1) kreisförmig oder oval ausgebildet ist.

4. Verbundelement nach einem der vorhergehenden Ansprüche, dadurch gekennzeichnet, daß das Blechelement (5) einen U-förmigen Querschnitt aufweist und die beiden Schenkel des Blechelementes (5) in je einer Nut (2) desselben Profiles (1) befestigt sind.

5. Verbundelement nach Anspruch 4, dadurch gekennzeichnet, daß zwischen den Schenkeln des Blechelementes (5) eine Isolierschicht angeordnet ist.

6. Verbundelement nach einem der vorhergehenden Ansprüche, dadurch gekennzeichnet, daß mindestens zwei Blechelemente (5) in einer entsprechenden Anzahl von Nuten (2) desselben Profiles (1) befestigt sind.

7. Verbundelement nach Anspruch 6, dadurch gekennzeichnet, daß zwischen den Blechelementen (5) Abstandshalter angeordnet sind.

8. Verbundelement nach einem der vorhergehenden Ansprüche, dadurch gekennzeichnet, daß zwei parallele Blechelemente (5), zwischen denen eine Isolierschicht (6) angeordnet ist, in je einer Nut (2) des Profiles (1) befestigt sind.

9. Verbundelement nach einem der vorhergehenden Ansprüche, dadurch gekennzeichnet, daß die Außenfläche (16) des Profiles (1) und die Außenfläche (17) des Blechelementes in einer Ebene liegen.

10. Verbundelement nach einem der vorhergehenden Ansprüche,
dadurch gekennzeichnet,
daß die Profile (1) und die Blechelemente (5) aus Aluminium bzw. einer Aluminiumlegierung oder aus Stahl bestehen.

11. Verbundelement nach einem der vorhergehenden Ansprüche,
dadurch gekennzeichnet,
daß das Profil (1) als Strangpreßprofil ausgebildet ist.

12. Verbundelement nach einem der vorhergehenden Ansprüche,
dadurch gekennzeichnet,
daß der Spreizprofilkörper (11) aus Aluminium bzw. einer Aluminiumlegierung besteht und als Strangpreßprofil ausgebildet ist.

13. Verbundelement nach einem der vorhergehenden Ansprüche,
dadurch gekennzeichnet,
daß das Blechelement (5) einseitig über einen Spreizprofilkörper (11) mit einer Anformung (12, 14) in der Nut (2) des Profils (1) befestigt ist und auf der anderen Seite mit einem weiteren Konstruktionselement verbunden ist, wobei das Blechelement (5) mindestens eine Einformung innerhalb der Blechfläche aufweist, durch die das Blechelement (5) eine Federwirkung erhält, die eine begrenzte, abgefederte Relativbewegung zwischen dem Profil (1) und dem weiteren Konstruktionselement erlaubt.

14. Spreizprofilkörper (11) zur Herstellung eines Verbundelementes nach einem der vorhergehenden Ansprüche, wobei der Spreizprofilkörper rohrförmig ausgebildet ist und eine über die gesamte Länge verlaufende Anformung, (12,14) aufweist.

15. Spreizprofilkörper nach Anspruch 14,
dadurch gekennzeichnet,
daß die Anformung (12) nasenförmig ausgebildet ist.

16. Spreizprofilkörper nach Anspruch 14,
dadurch gekennzeichnet,
daß die Anformung (14) T-förmig ausgebildet ist.

17. Spreizprofilkörper nach einem der Ansprüche 14 bis 16,
dadurch gekennzeichnet,
daß der Querschnitt des Spreizprofilkörpers rund oder oval ausgebildet ist.

18. Verfahren zur Herstellung eines Verbundelementes nach einem der Ansprüche 1 bis 13, wobei das Verfahren folgende Verfahrensschritte umfaßt:
a) Umformen von mindestens einem Ende des Blechelementes (5) entsprechend der inneren Form der Profilnut (2),
b) Einführen des zurückgebogenen Blechendes (8) in die Profilnut (2),
c) Einschieben des Spreizprofilkörpers (11) in das zurückgebogene Blechende (8),
d) Aufweiten des Spreizprofilkörpers (11), wobei durch die über mindestens eine der Nutwangen (3, 4) greifende Anformung (12, 14) des Spreizprofilkörpers (11) eine unzulässige Erweiterung der Nut (2) verhindert wird und eine kraft- und formschlüssige Verbindung erzielt wird.

19. Verfahren nach Anspruch 18,
dadurch gekennzeichnet,
daß vor dem Einsetzen des Blechelementes in die Profilnut der Spreizprofilkörper (11) in das zurtickgebogene Blechende (8) eingelegt wird, wobei der Spreizprofilkörper (11) ein geringfügiges Übermaß aufweist und dadurch im zurückgebogenen Blechende (8) verklemmt wird.

20. Verfahren nach einem der vorhergehenden Ansprüche,
dadurch gekennzeichnet,
daß zur Aufweitung des Spreizprofilkörpers ein Dorn mit Übermaß durch den Spreizprofilkörper gezogen oder geschoben wird.

21. Verfahren nach einem der vorhergehenden Ansprüche,
dadurch gekennzeichnet,
daß die Blechenden (8) durch Rollformen oder Umbördeln zurückgebogen werden.

22. Verwendung eines Verbundelementes nach einem der Ansprüche 1 bis 13 zur Herstellung von Wandelementen oder Fachwerkkonstruktionen, wie z.B. für Ölbohrplattformen, Schiffs- oder LKW-Aufbauten.

23. Verwendung eines Verbundelementes nach einem der Ansprüche 1 bis 13 zum Verbinden von Konstruktionselementen aus unterschiedlichen Werkstoffen.

24. Verwendung nach Anspruch 23, wobei das Blechelement (5) und/oder das Strangpreßprofil (1) aus einem Material besteht, das mit den zu verbindenden Konstruktionselementen verschweißbar ist.

25. Verwendung nach einem der Ansprüche 23 oder 24 zur Verbindung von Deckaufbauten aus Aluminium bzw. Aluminiumlegierungen mit Tragkonstruktionen aus Stahl, wie z.B. Ölbohrplattformen oder Schiffsdecks.

## Claims

1. A composite element consisting of a plate element (5) and at least one solid, open or hollow profile (1), with
a) the profile (1) comprising at least one undercut groove (2) whose opening is delimited by groove cheeks (3, 4), and
b) at least one end of the plate element (5) being bent backwardly in accordance with the inner shape of the profile groove (2), with a slot (10) being arranged between the outer edge (7) of the backwardly bent plate end (8) and the plate surface (9), and
c) the backwardly bent plate end (8) being inserted into the undercut profile groove (2), with the slot (10) being arranged in the region of the opening of the profile groove (2), and
d) a tubular profile expansion member (11) being inserted into the backwardly bent plate end (8), said member (11), on its side, comprising a formed-on portion (12, 14) which extends outwardly through the slot (10) over at least one of the groove cheeks (3, 4) of the profile (1), and
e) the profile expansion member (11) being expanded against the backwardly bent plate end (8) in such a way that the plate element (8) is connected to the profile (1) in a force-locking and form-fitting way.

2. Composite element according to claim 1,
characterised in that
a) in the region adjoining the backwardly bent plate end (8), the plate element comprises a turned-back portion (13) which embraces one of the groove cheeks (3, 4) of the profile (1) and
b) the profile expansion member (11) comprises a T-shaped formed-on portion (14) which, on one side, extends directly over a groove cheek (3) of the profile (1) and, on the other side, over the plate embracing the other groove cheek (4).

3. A composite element according to any one of the preceding claims,
characterised in
that the groove (2) of the profile (1) is circular or oval in shape.

4. A composite element according to any one of the preceding claims,
characterised in
that the plate element (5) comprises a U-shaped cross-section and that the two arms of the plate element (5) are each secured in a groove (2) of the same profile (1).

5. A composite element according to claim 4,
characterised in
that an insulating layer is arranged between the arms of the plate element (5).

6. A composite element according to any one of the preceding claims,
characterised in
that at least two plate elements (5) are secured in a corresponding number of grooves (2) of the same profile (1).

7. A composite element according to claim 6,
characterised in
that spacing elements are arranged between the plate elements (5).

8. A composite element according to any one of the preceding claims,
characterised in
that two parallel plate elements (5) with an insulating layer (6) arranged therebetween are each secured in a groove (2) of the profile (1).

9. A composite element according to any one of the preceding claims,
characterised in
that the outer face (16) of the profile (1) and the outer face (17) of the plate element are positioned in one plane.

10. A composite element according to any one of the preceding claims,
characterised in
that the profiles (1) and the plate elements (5) consist of aluminium or an aluminium alloy or of steel.

11. A composite element according to any one of the preceding claims,
characterised in
that the profile (1) is provided in the form of an extruded profile.

12. A composite element according to any one of the preceding claims,
characterised in
that the profile expansion member (11) consists of aluminium or an aluminium alloy and is produced in the form of an extruded profile.

13. A composite element according to any one of the preceding claims,
characterised in
that the plate element (5), on one side, is secured by means of a profile expansion member (11) with a formed-on portion (12, 14) in a groove (2) of the profile (1) and that, on the other side, it is connected to a further element and that the plate element (5) comprises at least one indentation in the plate surface, which provides the plate element (5) with a spring effect allowing a limited, resilient relative movement between the profile (1) and the further element.

14. A profile expansion member (11) for producing a composite element according to any one of the preceding claims, with the profile expansion member being tubular in shape and comprising a formed-on portion (12, 14) extending over the entire length.

15. An profile expansion member according to claim 14,
characterised in
that the formed-on portion (12) is nose-shaped.

16. A profile expansion member according to claim 14,
characterised in
that the formed-on portion (14) is T-shaped.

17. A profile expansion member according to any one of claims 14 to 16,
characterised in
that the cross-section of the profile expansion member is round or oval.

18. A process of producing a composite member according to any one of claims 1 to 13, with the process comprising the following process stages:
a) forming at least one end of the plate element (5) to match the inner shape of the profile groove (2);
b) introducing the backwardly bent plate end (8) into the profile groove (2);
c) sliding the profile expansion member (11) into the backwardly bent plate end (8);
d) expanding the profile expansion member (11), with the formed-on portion (12, 14) of the profile expansion member (11) extending over at least one of the groove cheeks (3, 4) preventing any impermissible expansion of the groove (2) and achieving a force-locking and form-fitting connection.

19. A process according to claim 18,
characterised in
that prior to inserting the plate element into the profile groove, the profile expansion member (11) is introduced into the backwardly bent plate end (8) and that the profile expansion member (11) comprises a slight excess dimension and, in consequence, is clamped into the backwardly bent plate end (8).

20. A process according to any one of the preceding claims, characterised in
that for the purpose of expanding the profile expansion member, an overdimensioned mandrel is drawn or pushed through the profile expansion member.

21. A process according to any one of the preceding claims, characterised in
that the plate ends (8) are bent backwardly by rollforming or beading.

22. Using a composite element according to any one of claims 1 to 13 for producing wall elements or latticework structures, e.g. for oil drilling platforms, ship or truck superstructures.

23. Using a composite element according to claims 1 to 13 for connecting elements of different materials.

24. Use according to claim 23, with the plate element (5) and/or the extruded profile (1) consisting of a material which may be welded to the elements to be connected.

25. Use according to any one of claims 23 or 24 for connecting deck superstructures of aluminium or aluminium alloy to supporting structures of steel, such as oil drilling platforms or ship decks.

## Revendications

1. Elément mixte constitué d'au moins un élément en tôle (5) et d'au moins un profilé (1) massif, ouvert ou creux, dans lequel
a) le profilé (1) présente au moins une rainure contre-dépouillée (2), dont l'ouverture est délimitée par des joues de rainure (3, 4),
b) au moins une extrémité de l'élément en tôle (5) est recourbée conformément à la forme intérieure de la rainure (2) du profilé, une fente (10) étant présente entre le bord extérieur (7) de l'extrémité de tôle recourbée (8) et la surface (9) de la tôle,
c) l'extrémité de tôle recourbée (8) est enfilée dans la rainure contre-dépouillée (2) du profilé, la fente (10) étant disposée dans la région de l'ouverture de la rainure (2) du profilé,
d) un corps profilé expansible tubulaire (11) est enfilé dans l'extrémité de tôle recourbée (8), corps qui présente une formation rapportée longitudinale (12, 14) qui traverse la fente (10) vers l'extérieur en s'engageant sur au moins une des joues de rainure (3, 4) du profilé (1), et
e) le corps profilé expansible (11) est élargi contre l'extrémité de tôle recourbée (8), de telle sorte que l'élément en tôle (5) est assemblé au profilé (1) par adhérence et par épousement de formes.

2. Elément mixte selon la revendication 1, caractérisé en ce que
a) l'élément en tôle présente, à côté de l'extrémité de tôle recourbée (8), un retroussement (13) qui enveloppe une des joues de rainure (3, 4) du profilé (1), et
b) le corps profilé expansible (11) présente une formation rapportée (14) en T qui, d'un côté, s'engage directement sur une joue de rainure (3) du profilé (1) et, de l'autre côté, s'engage sur la tôle enveloppant l'autre joue de rainure (4).

3. Elément mixte selon l'une des revendications précédentes, caractérisé en ce que la rainure (2) du profilé (1) est réalisée circulaire ou ovale.

4. Elément mixte selon l'une des revendications précédentes, caractérisé en ce que l'élément en tôle (5) présente une section en forme de U, et les deux branches de l'élément en tôle (5) sont chacune fixées dans une rainure respective (2) du même profilé (1).

5. Elément mixte selon la revendication 4, caractérisé en ce qu'une couche isolante est disposée entre les branches de l'élément en tôle (5).

6. Elément mixte selon l'une des revendications précédentes, caractérisé en ce qu'au moins deux éléments en tôle (5) sont fixés dans un nombre correspondant de rainures (2) du même profilé (1).

7. Elément mixte selon la revendication 6, caractérisé en ce que des écarteurs sont disposés entre les éléments en tôle (5).

8. Elément mixte selon l'une des revendications précédentes, caractérisé en ce que deux éléments en tôle parallèles (5), entre lesquels est disposée une couche isolante (6), sont chacun fixés dans une rainure respective (2) du profilé (1).

9. Elément mixte selon l'une des revendications précédentes, caractérisé en ce que la surface extérieure (16) du profilé (1) et la surface extérieure (17) de l'élément en tôle se situent dans un même plan.

10. Elément mixte selon l'une des revendications précédentes, caractérisé en ce que les profilés (1) et les éléments en tôle (5) sont réalisés en aluminium ou en un alliage d'aluminium, ou en acier.

11. Elément mixte selon l'une des revendications précédentes, caractérisé en ce que le profilé (1) est un profilé filé.

12. Elément mixte selon l'une des revendications précédentes, caractérisé en ce que le corps profilé expansible (11) est réalisé en aluminium ou en un alliage d'aluminium, et est un profilé filé.

13. Elément mixte selon l'une des revendications précédentes, caractérisé en ce que l'élément en tôle (5) est, d'un côté, fixé dans la rainure (2) du profilé (1) par l'intermédiaire d'un corps profilé expansible (11) présentant une formation rapportée (12, 14) et, de l'autre côté, est assemblé à un autre élément de construction, l'élément en tôle (5) présentant au moins une formation creusée à l'intérieur de la surface de la tôle, formation grâce à laquelle l'élément en tôle (5) est doté d'un effet élastique qui permet un mouvement relatif limité, de ressort, entre le profilé (1) et l'autre élément de construction.

14. Corps profilé expansible (11) pour la réalisation d'un élément mixte selon l'une des revendications précédentes, le corps profilé expansible étant réalisé tubulaire et présentant une formation rapportée (12, 14) s'étendant sur toute sa longueur.

15. Corps profilé expansible selon la revendication 14, caractérisé en ce que la formation rapportée (12) est réalisée en forme de talon.

16. Corps profilé expansible selon la revendication 14, caractérisé en ce que la formation rapportée (14) est réalisée en forme de T.

17. Corps profilé expansible selon l'une des revendications 14 à 16, caractérisé en ce que la section du corps profité expansible est réalisée ronde ou ovale.

18. Procédé de réalisation d'un élément mixte selon l'une des revendications 1 à 13, le procédé comprenant les étapes suivantes :
a) mise en forme d'au moins une extrémité de l'élément en tôle (5) conformément à la forme intérieure de la rainure (2) du profilé,
b) introduction de l'extrémité de tôle recourbée (8) dans la rainure (2) du profilé,
c) enfilage du corps profilé expansible (11) dans l'extrémité de tôle recourbée (8),
d) élargissement du corps profilé expansible (11), la formation rapportée (12, 14) du corps profilé expansible (11) qui s'engage sur au moins une des joues de rainure (3, 4) empêchant un élargissement inadmissible de la rainure (2) et apportant un assemblage par adhérence et par épousement de formes.

19. Procédé selon la revendication 18, caractérisé en ce que le corps profilé expansible (11) est inséré dans l'extrémité de tôle recourbée (8) avant d'introduire l'élément en tôle dans la rainure du profilé, le corps profilé expansible (11) présentant une légère surcote et étant ainsi bloqué par serrage dans l'extrémité de tôle recourbée (8).

20. Procédé selon l'une des revendications précédentes, caractérisé en ce qu'afin d'élargir le corps profilé expansible, on tire ou pousse à travers le corps profilé expansible un mandrin présentant une surcote.

21. Procédé selon l'une des revendications précédentes, caractérisé en ce que les extrémités de tôle (8) sont recourbées par roulage ou rabattement.

22. Utilisation d'un élément mixte selon l'une des revendications 1 à 13 pour la réalisation d'éléments de cloisons ou de constructions en charpente métallique, comme par exemple pour des plate-formes de forage de pétrole, des superstructures de bateaux ou des carrosseries de camions.

23. Utilisation d'un élément mixte selon l'une des revendications 1 à 13 pour l'assemblage d'éléments de construction constitués de matériaux différents.

24. Utilisation selon la revendication 23, l'élément en tôle (5) et/ou le profilé filé (1) étant réalisé(s) en un matériau pouvant être soudé aux éléments de construction à assembler.

25. Utilisation selon la revendication 23 ou 24 pour l'assemblage de superstructures en aluminium ou en alliage d'aluminium à des constructions porteuses en acier, comme par exemple des plateformes de forage pétrolier ou des ponts de bateaux.
